# EUROPÄISCHE PATENTANMELDUNG

(11) **EP 0 901 015 A2**
(43) Veröffentlichungstag der Anmeldung: **10.03.1999**
(21) Anmeldenummer: 98115922.1
(22) Anmeldetag: 24.08.1998
(51) Int. Cl.: G01N 29/22, G01N 29/24, G10K 11/36

(54) **Ultraschallwandler-Anordnung**

(30) Priorität: 05.09.1997 DE 19738791
(71) Anmelder: SIEMENS AKTIENGESELLSCHAFT, 80333 München (DE)
(72) Erfinder: Ritter, Joachim, Dipl.-Ing., 91077 Neunkirchen am Brand (DE); Rückelt, Bernd, Dipl.-Ing., 91052 Erlangen (DE); Kutil, Günther, 91336 Heroldsbach (DE)

(57) **Zusammenfassung**

Die Erfindung betrifft eine Ultraschallwandler-Anordnung zur Ultraschallprüfung eines Werkstücks (2), mit einem Ultraschallwandler (10), mit einem ersten Vorlaufkörper (4) und mit einem zweiten Vorlaufkörper (5), der akustisch vollständig von dem ersten Vorlaufkörper (4) getrennt ist. Die Erfindung sieht vor, den Ultraschallwandler (10) sowohl an den ersten Vorlaufkörper (4) als auch an den zweiten Vorlaufkörper (5) akustisch anzukoppeln. Der Ultraschallwandler (10) ist bevorzugt im Impuls-Echo-Modus betreibbar. Optional sind zusätzlich zwei S/E-Ultraschallwandler (20-4, 20-5) vorgesehen, die im Sende-Empfangs-Modus betreibbar sind.

## Beschreibung

Die Erfindung liegt auf dem Gebiet der zerstörungsfreien akustischen Meß- und/ oder Prüftechnik.

Sie betrifft eine Ultraschallwandler-Anordnung zur Ultraschallprüfung eines Werkstückes
a) mit einem Ultraschallwandler,
b) mit einem ersten Vorlaufkörper und
c) mit einem zweiten Vorlaufkörper, der durch einen Zwischenraum akustisch vollständig von dem ersten Vorlaufkörper getrennt ist.

Im deutschen Gebrauchsmuster DE 85 27 231 ist ein Ultraschallwinkelprüfkopf mit mindestens zwei Ultraschallwandlern beschrieben. Der untere der Ultraschallwandler ist an einen unteren Vorlaufkörper akustisch angekoppelt, der unmittelbar an ein Werkstück akustisch ankoppelbar ist. Über dem unteren Ultraschallwandler ist ein oberer Vorlaufkörper angeordnet, der seinerseits einen oberen Ultraschallwandler trägt. Die Vorlaufkörper haben Keilform, so daß sich in nachteiliger Weise unterschiedliche Einschallwinkel für die beiden Ultraschallwandler ergeben. Dadurch ist das Anwendungsgebiet für einen solchen Ultraschallwinkelprüfkopf eng begrenzt.

Aus der Europäischen Patentschrift EP 0 667 978 B1 ist ein Ultraschallprüfkopf bekannt, der eine in einem gemeinsamen Gehäuse angeordnete Ultraschallwandler-Anordnung mit wenigstens einem Ultraschallwandler-Array und wenigstens zwei akustisch voneinander getrennten S/E-Ultraschallwandlern umfaßt. Das Ultraschallwandler-Array ist im Impuls-Echo-Modus betreibbar, die beiden S/E-Ultraschallwandler im Sende-Empfangs-Modus. Das im Impuls-Echo-Modus betriebene Ultraschallwandler-Array dient dem Detektieren oberflächenferner Fehler im Werkstück. Dagegen ist der Impuls-Echo-Modus, bei dem da Senden und das Empfangen der Ultraschallwellen in ein und demselben Wandler stattfindet, zur Detektion oberflächennaher Fehler im Werkstück nicht geeignet, da ein zum Senden aktiver Wandler für eine gewisse Zeitspanne nach dem Sendevorgang für die vom Fehler im Werkstück zurückreflektierten Signale praktisch blind ist ( 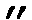 Nachklingeln"). Zur Detektion oberflächennaher Fehler sieht der in der EP 0 667 978 B1 beschriebene Ultraschallprüfkopf zwei gesonderte S/E-Ultraschallwandler vor, von denen einer als Sender und der andere als Empfänger betrieben ist. Dabei stört das 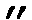 Nachklingeln" in dem als Sender betriebenen S/E-Ultraschallwandler nicht, da der Empfang der am Fehler reflektierten Ultraschallwelle in dem zweiten - als Empfänger betriebenen - S/E-Ultraschallwandler stattfindet. In dem Ultraschallprüfkopf sind somit sowohl die Vorteile des Impuls-Echo-Modus' als auch die Vorteile des SendeEmpfangs-Modus' vereinigt.

Das Ultraschallwandler-Array und die S/E-Ultraschallwandler nach EP 0 667 978 B1 sind jeweils auf genau einem gesonderten Vorlaufkörper angebracht, die jeweils durch eine Trennschicht voneinander akustisch entkoppelt sind. Der Nachteil dieses Ultraschallprüfkopfes besteht deshalb z.B. darin, daß die Ankoppelfläche, die nötig ist um den Prüfkopf akustisch an das Werkstück anzukoppeln, sehr groß ist. Dadurch ist der Anwendungsbereich solcher Prüfköpfe stark eingeschränkt. Ankoppelprobleme entstehen insbesondere bei Werkstücken mit gekrümmten Oberflächen, z.B. bei der Rohrprüfung.

Der Erfindung liegt daher die Aufgabe zugrunde, eine Ultraschallwandler-Anordnung anzugeben, die vielfältiger und breiter anwendbar ist als die bekannt gewordenen Ultraschallprüfköpfe.

Zur Lösung dieser Aufgabe sind gemäß der Erfindung bei der Ultraschallwandler-Anordnung der eingangs genannten Art die beiden Vorlaufkörper unmittelbar akustisch an das Werkstück ankoppelbar, und der Ultraschallwandler ist sowohl an den ersten Vorlaufkörper als auch an den zweiten Vorlaufkörper akustisch angekoppelt.

Dieser Anordnung liegt die Erkenntnis zugrunde, daß ein Ultraschallwandler - in Abkehr von der bisher üblichen Bauweise - gleichzeitig an zwei Vorlaufkörper akustisch angekoppelt werden kann, ohne daß die Abstrahl- oder Empfangscharakteristik derart verändert werden würde, daß der Ultraschallwandler nicht mehr für die Ultraschallprüfung eines Werkstückes geeignet wäre. Die Ultraschallwandler-Anordnung nach der Erfindung, bei der vorgesehen ist, einen Ultraschallwandler gleichzeitig an zwei Vorlaufkörper akustisch anzukoppeln, ist erheblich vielseitiger anwendbar als eine solche Anordnung, bei der ein Ultraschallwandler an genau einen Vorlaufkörper akustisch angekoppelt ist.

Bevorzugt ist der Ultraschallwandler symmetrisch bezüglich des als Trennbereich wirkenden Zwischenraums zwischen dem ersten und dem zweiten Vorlaufkörper angebracht. Dadurch wird eine besonders gute Abstrahl- bzw. Empfangscharakteristik des Ultraschallwandlers erreicht.

Beispielsweise liegt die Dicke des Trennbereichs im Bereich der Wellenlänge des abgestrahlten Ultraschalls. Sie weist insbesondere in etwa einen Wert aus dem Bereich von 1/10 bis zum 10-fachen der Wellenlänge auf, z.B. aus einem Bereich von 0,5 mm bis 3 mm.

In einer weiteren Ausgestaltung ist der Ultraschallwandler für sich im Werkstück ausbreitende Transversal- oder Longitudinalwellen im Impuls-Echo-Modus betreibbar.

Von ganz besonderem Vorteil ist dies, falls - gemäß einer anderen Ausgestaltung der Ultraschallwandler-Anordnung - zusätzlich ein erster und ein zweiter S/E-Ultraschallwandler vorgesehen sind, die im Sende-Empfangs-Modus für sich im Werkstück oberflächennah ausbreitende Longitudinalwellen betreibbar sind, wobei der erste S/E-Ultraschallwandler ausschließlich an den ersten Vorlaufkörper und der zweite S/E-Ultraschallwandler ausschließlich an den zweiten Vorlaufkörper akustisch angekoppelt ist. Mit Vorteil ist dadurch nämlich die Ultraschallwandler-Anordnung nicht nur im Impuls-Echo-Modus, sondern vielmehr auch im Sende-Empfangs-Modus betreibbar, und erlaubt dadurch bei Verwendung nur einer einzigen Ultraschallwandler-Anordnung die Untersuchung sowohl oberflächenferner als auch oberflächennaher Bereiche in dem zu prüfenden Werkstück (hybride Betriebsweise). Oberflächennahe Bereiche sind solche, die weniger als ca. 20 mm bis 25 mm unter der Werkstückoberfläche liegen.

Mit der letztgenannten Ausgestaltung ermöglicht die Ultraschallwandler-Anordnung weitestgehend die gleichen Prüffunktionen wie der in der EP 0 667 978 B1 beschriebene Ultraschallprüfkopf, ist aber im Gegensatz zu dem bekannten Ultraschallprüfkopf erheblich kompakter, d.h. es wird eine geringere Ankoppelfläche auf dem zu prüfenden Werkstück benötigt. Dadurch ermöglicht die Ultraschallwandler-Anordnung nach der Erfindung im besonderen auch die Prüfung von solchen Rohren, die infolge ihres kleinen Durchmessers mit den bekannt gewordenen Ultraschallprüfköpfen nicht geprüft werden können.

Beispielsweise sind die oder einer der S/E-Ultraschallwandler als Array ausgebildet.

Bevorzugt sind der Ultraschallwandler und einer der S/E-Ultraschallwandler derart beabstandet und ausgerichtet, daß das sich in Richtung der abgestrahlten Schallwelle vor dem Ultraschallwandler erstreckende Vorlaufvolumen des ersten bzw. zweiten Vorlaufkörpers als Vorlaufvolumen des einen S/E-Ultraschallwandlers nutzbar ist. Eine derart ausgestaltete Ultraschallwandler-Anordnung ist bezüglich der nötigen Ankoppelfläche auf dem Werkstück ganz besonders platzsparend und kompakt, da ein bestimmtes Vorlaufvolumen von mehreren Ultraschallsendern, insbesondere von dem Ultraschallwandler und von dem als Sender betriebenen S/E-Ultraschallwandler, nutzbar ist. Die Nutzung eines bestimmten Vorlaufvolumens durch mehrere Wandler wird letztlich erst dadurch ermöglicht, daß der Ultraschallwandler sowohl an den ersten Vorlaufkörper als auch an den zweiten Vorlaufkörper akustisch angekoppelt ist. Ein Teil des Ultraschallwandlers und einer der S/E-Ultraschallwandler sind dann nämlich an einen gemeinsamen Vorlaufkörper angekoppelt, so daß der Nutzung des genannten gemeinsamen Vorlaufvolumens keine akustischen Trennwände entgegenstehen, die die ungestörte Wellenausbreitung verhindern würden.

Zweckmäßig ist es, daß der Ultraschallwandler, die S/E-Ultraschallwandler und die beiden Vorlaufkörper in einem gemeinsamen Gehäuse angeordnet sind. Dadurch ist die gesamte Anordnung vor Stör- und Umwelteinflüssen geschützt.

Nach einer anderen vorzugsweisen Ausgestaltung sind die S/E-Ultraschallwandler symmetrisch bezüglich des Ultraschallwandlers angeordnet. Dadurch wird die zur Ankopplung der Ultraschallwandler-Anordnung an das Werkstück notwendige Ankoppelfläche weiter reduziert.

In einer besonders bevorzugten Ausgestaltung der Ultraschallwandler-Anordnung ist in einer auf dem Ultraschallwandler senkrecht stehenden Querschnittsfläche durch den Ultraschallwandler und die S/E-Ultraschallwandler mindestens einer der S/E-Ultraschallwandler nicht parallel zu dem Ultraschallwandler ausgerichtet. Dadurch wird in vorteilhafter Weise eine weitere Steigerung der Kompaktheit der Anordnung erreicht, da ein größeres Vorlaufvolumen gemeinsam von dem Ultraschallwandler und einem der S/E-Ultraschallwandler nutzbar wird.

Beispielsweise ist der als Sender dienende S/E-Ultraschallwandler in der Querschnittsfläche derart bezüglich des Ultraschallwandlers geneigt, daß die Abstrahlrichtung des Senders eine Komponente in Richtung auf den als Empfänger dienenden S/E-Ultraschallwandler aufweist. Analog gilt dies für den als Empfänger dienenden S/E-Ultraschallwandler.

Bevorzugt schließen die beiden S/E-Ultraschallwandler zueinander einen Winkel von weniger als 180° ein, wobei dieser Schnittwinkel der Oberfläche des Werkstücks zugewandt ist. In einer besonderen Ausgestaltung beträgt der Winkel 150°.

Nach einer anderen Ausgestaltung ist der Ultraschallwandler ein Array. Das Array erlaubt in an sich bekannter Weise ein Schwenken der Abstrahl- oder Empfangsrichtung des Ultraschallwandlers bei entsprechender phasenversetzter elektronischer Ansteuerung der einzelnen Array-Zeilen. Dadurch ist die Ultraschallwandler-Anordnung in vorteilhafter Weise einfach und schnell an unterschiedliche Prüfgeometrien anpaßbar.

Vorzugsweise weist das Array parallel zueinander verlaufende, einzeln elektrisch ansteuerbare Zeilen auf, die jeweils sowohl an den ersten Vorlaufkörper als auch an den zweiten Vorlaufkörper akustisch angekoppelt sind.

Nach einer weiteren Ausgestaltung sind die Zeilen in jeweils zwei akustisch getrennte, elektrisch verbundene Teile geteilt, wobei der jeweilige erste Teil an den ersten Vorlaufkörper, aber nicht an den zweiten Vorlaufkörper, und der jeweilige zweite Teil an den zweiten Vorlaufkörper, aber nicht an den ersten Vorlaufkörper akustisch angekoppelt ist. Bei einer derartigen Ausgestaltung wird in vorteilhafter Weise ein akustisches Übersprechen zwischen den Vorlaufkörpern erheblich reduziert, ohne die Sende- und/oder Empfangscharakteristik des Arrays zu beeinflussen.

Beispielsweise liegt der Abstand zwischen jeweils zwei akustisch getrennten Teilen einer Zeile im Bereich der Ultraschallwellenlänge, insbesondere im Bereich von 1/10 bis zum 10-fachen der Wellenlänge, beispielsweise in einem Bereich von 0,5 mm bis 3 mm.

Vier Ausführungsbeispiele einer Ultraschallwandler-Anordnung nach der Erfindung werden anhand der Figuren 1 bis 6 näher erläutert. Es zeigen:
- FIG 1: eine Ultraschallwandler-Anordnung mit einem Ultraschallwandler auf zwei Vorlaufkörpern in einer Draufsicht,
- FIG 2: in Draufsicht eine Ultraschallwandler-Anordnung, die zusätzlich zu der in Figur 1 gezeigten Anordnung zwei S/E-Ultraschallwandler aufweist,
- FIG 3: in Draufsicht eine Ultraschallwandler-Anordnung mit einem als Array ausgestalteten Ultraschallwandler,
- FIG 4: in Draufsicht einen als Array ausgestalteten Ultraschallwandler mit akustisch geteilten Zeilen,
- FIG 5: einen Querschnitt durch Figur 3 entlang der Linie V-V und
- FIG 6: einen Querschnitt durch Figur 2 entlang der Linie VI-VI.

In den Figuren ist die der elektrischen Ansteuerung der einzelnen Wandler dienende Verdrahtung aus Gründen der Übersichtlichkeit nicht dargestellt.

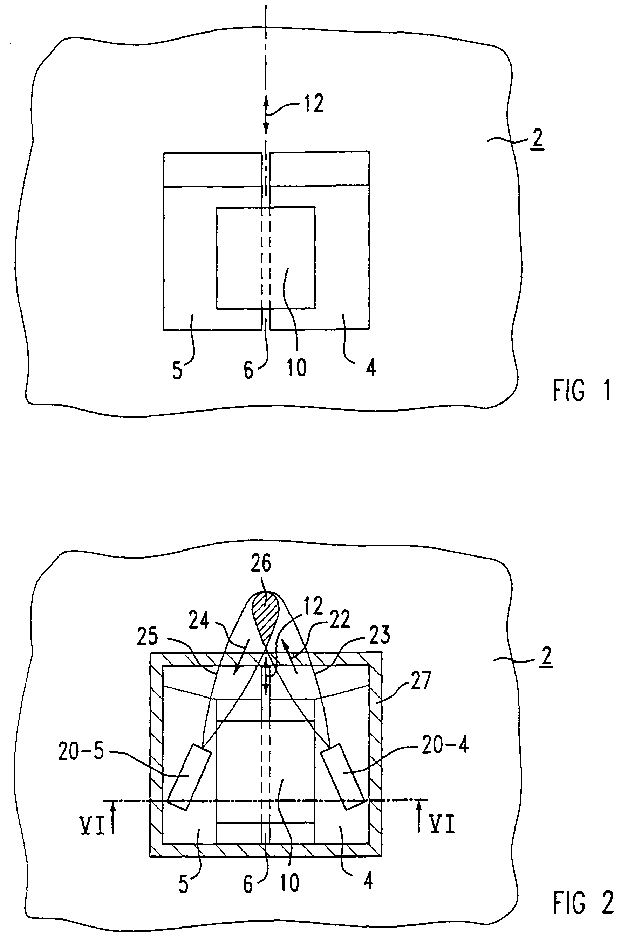

In Figur 1 ist in einer Draufsicht die Oberfläche eines Werkstücks 2 gezeigt, auf der ein erster Vorlaufkörper 4 und ein zweiter Vorlaufkörper 5 akustisch angekoppelt sind. Die beiden Vorlaufkörper 4, 5 sind durch einen Trennbereich oder Zwischenraum 6 vollständig akustisch voneinander getrennt. An beiden Oberflächen der Vorlaufkörper 4, 5 ist ein gemeinsamer Ultraschallwandler 10 angekoppelt. Das akustische Ankoppeln geschieht mittels einer Klebeverbindung. Der Ultraschallwandler 10 ist symmetrisch bezüglich des Trennbereichs 6 angeordnet.

Die Vorlaufkörper 4, 5 sind aus Plexiglas gefertigt. Der Trennbereich 6 enthält korkhaltiges Material.

In dem in Figur 1 gezeigten Beispiel ist der Ultraschallwandler 10 im Impuls-Echo-Modus betreibbar. Die Sende- und Empfangsrichtung 12 des Ultraschallwandlers 10 ist angedeutet.

In dem in Figur 2 gezeigten Ausführungsbeispiel sind zusätzlich zu dem in Figur 1 gezeigten Beispiel ein erster S/E-Ultraschallwandler 20-4 und ein zweiter S/E-Ultraschallwandler 20-5 vorhanden. Der erste S/E-Ultraschallwandler 20-4 ist an den ersten Vorlaufkörper 4, der zweite S/E-Ultraschallwandler 20-5 an den zweiten Vorlaufkörper 5 akustisch angekoppelt. Der erste S/E-Ultraschallwandler 20-4 ist als Sender betrieben. Die zugehörige Haupt-Senderichtung 22 und die Haupt-Empfangsrichtung 24 des zweiten, als Empfänger betriebenen S/E-Ultraschallwandlers 20-5 sind eingezeichnet. Mit 23 bzw. 25 sind die schematisch angedeuteten Schallkeulen des Senders bzw. Empfängers bezeichnet. Die beiden Schallkeulen 23, 25 überlagern sich in einer Überlagerungszone 26, die in etwa dem im Sende-Empfangs-Modus untersuchten Prüfbereich im Werkstück 2 entspricht.

Durch entsprechende Ansteuerung ist es möglich, den Sender zum Empfänger und den Empfänger zum Sender zu machen.

Der Ultraschallwandler 10, die beiden S/E-Ultraschallwandler 20-4, 20-5 sowie die beiden Vorlaufkörper 4, 5 sind in einem gemeinsamen Gehäuse 27 untergebracht.

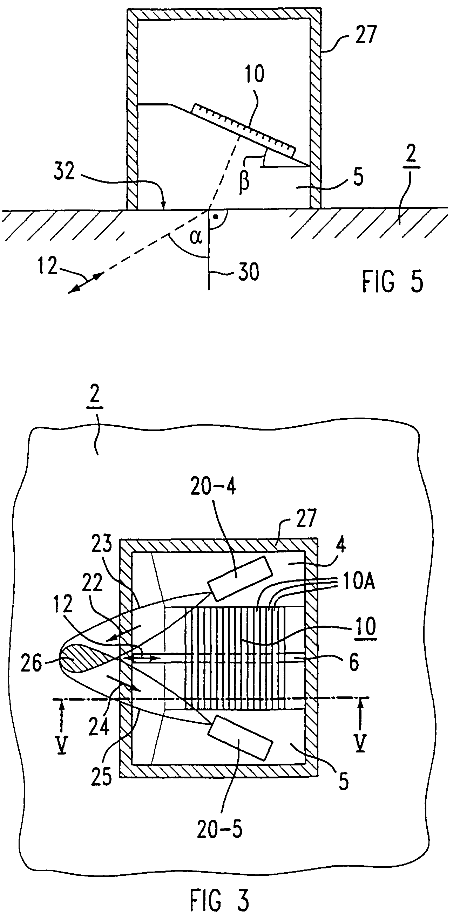

Das in Figur 3 dargestellte Beispiel entspricht dem in Figur 2 gezeigten Beispiel mit dem Unterschied, daß der Ultraschallwandler 10 aus einem Array von einzeln elektrisch ansteuerbaren, parallel zueinander angeordneten Zeilen 10A besteht. Die insgesamt 16 einzelnen Zeilen 10A des Arrays sind sowohl an den ersten Vorlaufkörper 4 als auch an den zweiten Vorlaufkörper 5 akustisch angekoppelt. Sie sind symmetrisch bezüglich des Trennbereichs 6 ausgerichtet.

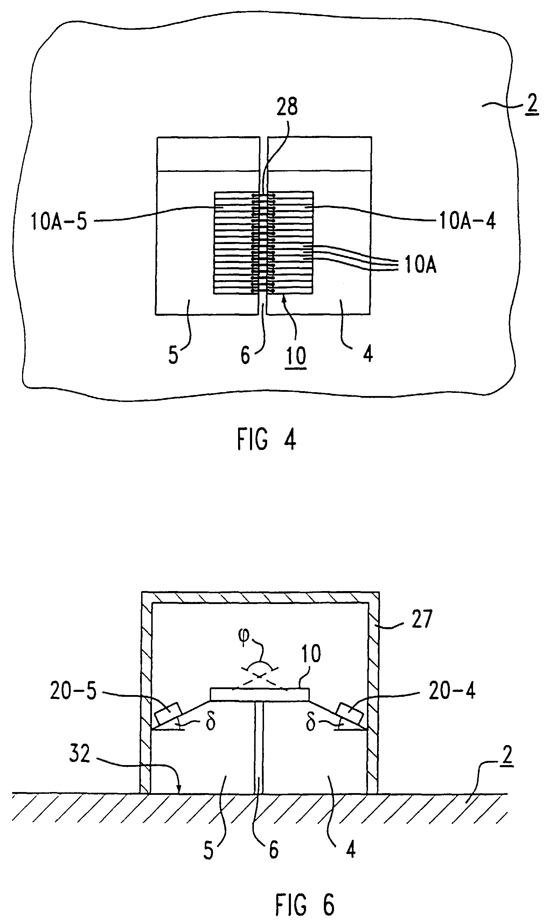

Figur 4 zeigt ebenfalls in einer Draufsicht auf ein Werkstück 2 ein weiteres Beispiel für eine Ultraschallwandler-Anordnung nach der Erfindung, bei der ein Ultraschallwandler 10 als Zeilen-Array ausgebildet ist, wobei jede der insgesamt 16 Zeilen aus einem ersten, an einen ersten Vorlaufkörper 4 angekoppelten Teil 10A-4 und aus einem zweiten, an einen zweiten Vorlaufkörper 5 angekoppelten Teil 10A-5 besteht. Die beiden zu einer Zeile gehörigen Teile 10A-4 und 10A-5 sind jeweils durch eine elektrische Verbindung 28 (metallischer Draht) miteinander verbunden. Die elektrische Verbindung 28 erstreckt sich über einen Trennbereich 6, der die beiden Vorlaufkörper 4, 5 akustisch voneinander trennt. Jeweils zwei einander zugehörige Teile sind nicht -zumindest nicht wesentlich- relativ zueinander versetzt angeordnet, d.h. in einer gedachten geraden Verlängerung des einen Teils 10A-4 liegt der andere Teil 10A-5 der Zeile.

In Figur 5 ist ein Querschnitt entlang der Linie V-V durch Figur 3 gezeigt. Das Gehäuse 27 schließt u.a. den Ultraschallwandler 10 und den zweiten Vorlaufkörper 5 ein. Der Vorlaufkörper 5 ist auf dem Werkstück 2 aufgesetzt.

Die von dem Ultraschallwandler 10 abgestrahlte Ultraschallwelle tritt unter einem Einschallwinkel α - gemessen relativ zu einer Oberflächennormale 30 - in das Werkstück 2 ein. Die entsprechende Senderichtung 12, die beim Impuls-Echo-Modus gleichzeitig die Empfangsrichtung darstellt, ist eingezeichnet. Zur Einstellung brauchbarer Einschallwinkel α unter Berücksichtigung des Brechungsgesetzes an der Oberfläche des Werkstücks 2 ist der Ultraschallwandler 10 relativ zur Ankoppelfläche 32 des Vorlaufkörpers 5 auf dem Werkstück 2 um einen Keilwinkel β geneigt. Der Vorlaufkörper 5 ist entsprechend gekeilt. Ein typischer Wert für β ist 40°.

Figur 6 zeigt einen Querschnitt durch Figur 2 entlang der Schnittlinie VI-VI. Die beiden S/E-Ultraschallwandler 20-4, 20-5 sind bezüglich des Ultraschallwandlers 10 jeweils um einen Dachwinkel δ geneigt und symmetrisch bezüglich des Ultraschallwandlers 10 angeordnet. Die Vorlaufkörper 4, 5 sind entsprechend gekeilt. Ein typischer Wert für δ ist 15°, so daß die beiden S/E-Ultraschallwandler 20-4, 20-5 zueinander einen Winkel ϕ von ca. 150° einschließen. Infolge der gezeichneten Keilung können die S/E-Ultraschallwandler 20-4, 20-5 in dem jeweiligen Vorlaufkörper 4 bzw. 5 ein besonders großes Vorlaufvolumen nutzen, das (gleichzeitig) auch von dem Ultraschallwandler 10 nutzbar ist.

## Patentansprüche

1. Ultraschallwandler-Anordnung zur Ultraschallprüfung eines Werkstückes (2)
a) mit einem Ultraschallwandler (10),
b) mit einem ersten Vorlaufkörper (4) und
c) mit einem zweiten Vorlaufkörper (5), der durch einen Zwischenraum (6) akustisch vollständig von dem ersten Vorlaufkörper (4) getrennt ist,
**dadurch gekennzeichnet**,
daß die beiden Vorlaufkörper (4, 5) unmittelbar akustisch an das Werkstück (2) ankoppelbar sind, und
daß der Ultraschallwandler (10) sowohl an den ersten Vorlaufkörper (4) als auch an den zweiten Vorlaufkörper (5) akustisch angekoppelt ist.

2. Ultraschallwandler-Anordnung nach Anspruch 1,
**dadurch gekennzeichnet**, daß der Ultraschallwandler (10) symmetrisch bezüglich des Zwischenraums (6) zwischen dem ersten und dem zweiten Vorlaufkörper (4, 5) angebracht ist.

3. Ultraschallwandler-Anordnung nach einem der Ansprüche 1 oder 2,
**dadurch gekennzeichnet**, daß der Ultraschallwandler (10) für sich im Werkstück (2) ausbreitende Transversal- oder Longitudinalwellen im Impuls-Echo-Modus betreibbar ist.

4. Ultraschallwandler-Anordnung nach einem der Ansprüche 1 bis 3,
**gekennzeichnet durch**
d) zusätzlich einen ersten und einen zweiten S/E-Ultraschallwandler (20-4, 20-5),
die im Sende-Empfangs-Modus für sich im Werkstück (2) oberflächennah ausbreitende Longitudinalwellen betreibbar sind, wobei der erste S/E-Ultraschallwandler (20-4) ausschließlich an den ersten Vorlaufkörper (4) und der zweite S/E-Ultraschallwandler (20-5) ausschließlich an den zweiten Vorlaufkörper (5) akustisch angekoppelt ist.

5. Ultraschallwandler-Anordnung nach Anspruch 4,
**dadurch gekennzeichnet**, daß der Ultraschallwandler (10) und einer der S/E-Ultraschallwandler (20-4 oder 20-5) derart beabstandet und ausgerichtet sind, daß das sich in Richtung der abgestrahlten Schallwelle vor dem Ultraschallwandler (10) erstreckende Vorlaufvolumen des ersten bzw. zweiten Vorlaufkörpers (4 bzw. 5) als Vorlaufvolumen des einen S/E-Ultraschallwandlers (20-4 oder 20-5) nutzbar ist.

6. Ultraschallwandler-Anordnung nach einem der Ansprüche 4 oder 5,
**dadurch gekennzeichnet**, daß der Ultraschallwandler (10), die S/E-Ultraschallwandler (20-4, 20-5) und die beiden Vorlaufkörper (4, 5) in einem gemeinsamen Gehäuse (1) angeordnet sind.

7. Ultraschallwandler-Anordnung nach einem der Ansprüche 4 bis 6,
**dadurch gekennzeichnet**, daß die S/E-Ultraschallwandler (20-4, 20-5) symmetrisch bezüglich des Ultraschallwandlers (10) angeordnet sind.

8. Ultraschallwandler-Anordnung nach einem der Ansprüche 4 bis 7,
**dadurch gekennzeichnet**, daß in einer auf dem Ultraschallwandler (10) senkrecht stehenden Querschnittsfläche (VI-VI) durch den Ultraschallwandler (10) und die S/E-Ultraschallwandler (20-4, 20-5) mindestens einer der S/E-Ultraschallwandler (20-4, 20-5) nicht parallel zu dem Ultraschallwandler (10) ausgerichtet ist.

9. Ultraschallwandler-Anordnung nach einem der Ansprüche 1 bis 8,
**dadurch gekennzeichnet**, daß der Ultraschallwandler (10) ein Array ist.

10. Ultraschallwandler-Anordnung nach Anspruch 9,
**dadurch gekennzeichnet**, daß das Array parallel zueinander verlaufende, einzeln elektrisch ansteuerbare Zeilen (10A) aufweist, die jeweils sowohl an den ersten Vorlaufkörper (4) als auch an den zweiten Vorlaufkörper (5) akustisch angekoppelt sind.

11. Ultraschallwandler-Anordnung nach Anspruch 10,
**dadurch gekennzeichnet**, daß die Zeilen (10A) in jeweils zwei akustisch getrennte, elektrisch verbundene Teile (10A-4, 10A-5) geteilt sind, wobei der jeweilige erste Teil (10A-4) an den ersten Vorlaufkörper (4), aber nicht an den zweiten Vorlaufkörper (5), und der jeweilige zweite Teil (10A-5) an den zweiten Vorlaufkörper (5), aber nicht an den ersten Vorlaufkörper (4) akustisch angekoppelt ist.
